# EUROPEAN PATENT APPLICATION

(11) **EP 2 343 350 A2**
(43) Date of publication of application: **13.07.2011**
(21) Application number: 09816353.8
(22) Date of filing: 28.08.2009
(51) Int. Cl.: C10G 1/10, C08J 11/12, B29B 17/00

(54) **SYSTEM FOR RECYCLING USED TIRES**

(30) Priority: 24.09.2008 KR 20080093763
(71) Applicant: Jeon, Yeong Min, Daejeon 302-792 (KR)
(72) Inventor: Jeon, Yeong Min, Daejeon 302-792 (KR)
(74) Representative: Pulieri, Gianluca Antonio
(86) International application number: PCT/KR2009/004838
(87) International publication number: WO 2010/035960

(57) **Abstract**

The present invention discloses a system for recycling used tires. The disclosed system for recycling used tires comprises: a pyrolysis furnace that recycles inputted used tires using a carrier gas and decomposes the used tires through direct heating; and an oil collecting unit that collects oil by cooling and condensing hot steam generated by the pyrolysis furnace. The system also includes a carrier gas circulation line and a carrier gas circulation and supply device. The carrier gas circulation line circulates through the pyrolysis furnace and the oil collecting unit. The carrier gas circulation and supply device is connected to the carrier gas circulation line and comprises a sensing element that measures both the temperature inside the pyrolysis furnace and the pressure inside the carrier gas circulation line. In addition, the carrier gas circulation and supply device collects and stores a non-condensable gas generated by the pyrolysis furnace and selectively supplies the non-condensable gas to the pyrolysis furnace.

## Description

### Field of the Invention

The present invention relates to a system for recycling waste tires enabling to extract various energy sources from the waste tires by pyrolyzing the waste tires through a heating method, and more particularly, to a system for recycling waste tires enabling to achieve economical management and to enhance yield to extract oil by recycling a non-condensed gas produced during the pyrolyzing process as carrier gas.

### Description of the Related Art

Recently, the demand for tires is rapidly increasing according to the increasing of the demand for vehicles, and therefore the amount of the waste tires is also increased.

As well known, the waste tires are mainly composited high polymer compounds, and their caloric value is about 34MJ/kg which is higher than 29MJ/kg of a standard caloric value. Further, the general composition of tires is 43.5wt% of styrene-butadiene copolymer, 32.6wt% of carbon black, 21.7wt% of oil, and 2.2wt% of additives such as sulfur and zinc oxide except for iron cores and nylon.

The Ministry of Environment prohibits the usage of the waste tires as fuel since they produce various environment pollutions such as sulfur oxides, non-burned hydrocarbon, and sooty smoke when burned.

Therefore, a method to use the waste tires except for burning is researched. The waste tires are recycled as footpath blocks, recycled tires, recycled rubber, art fishing banks, and buffers of any structure, but their appliance is limited. Also, scrapped materials and pollutions are produced when the recycled products are manufactured, and environmental pollution will be caused when they are scrapped.

Meanwhile, a method to produce fuel without recycling the waste tires is tried. In producing fuel, a pyrolyzing furnace is used to pyrolyze the waste tires, and the method is divided a direct heating method and an indirect heating method according to the heating method of the pyrolyzing furnace.

The direct heating method has a risk for explosion since a flame produced when the waste tires are heated is chemically reacted with the oxygen contained in air in the furnace. Also, the oil produced by the direct heating method contains moist and glass carbon, which causes the quality of the oil to be worse.

The indirect heating method has no risk for explosion different from the above the direct heating method, but it has lower thermal efficiency and uses most of the oil obtained as a by-product as fuel, which causes the recycling system of the waste tires to be lowered in economy aspect and causes difficulty to treat carbon obtained as a by-product.

To solve the above problems, the present applicant filed ^{┌}System for recycling waste tires_{┘} , which is registered in Korean Patent No. 10-0628890.

The system for recycling waste filed by the present applicant comprises a pyrolyzing means for pyrolyzing waste tires using carbon dioxide (CO2) or nitrogen (N2) as a carrier gas in a pyrolyzing furnace by means of the direct heating method; a first carbon treating means for separating carbon and iron cores by pulverizing the remains in the pyrolyzing furnace; an oil heaping means for separating oil by cooling condensing exhaust gas separated in the pyrolyzing furnace; a second carbon treating means for producing electricity and cooling water by operating a steam turbine and a suction typed refrigerator after producing high pressed steam using high temperature exhaust gas produced by incinerating the carbon separated by the first carbon treating means; and an exhaust gas treating means for discharging pollution-free air after cleaning the exhaust gas which is exhausted from the second carbon treating means and for separating a portion of carbon dioxide (CO2) or nitrogen (N2) from the discharged air and collecting it.

The above mentioned system for recycling waste tires uses the pyrolyzing furnace having the direct heating method which uses carrier gas, and therefore it prevents explosion of the pyrolyzing furnace and it can extract high pure oil which does not contains moisture and glass carbon.

However, the system for recycling waste tires of the present applicant required an additional apparatus for providing and discharging carrier gas because carbon dioxide (CO2) or nitrogen (N2) is used as carrier gas although the pyrolysis is done by the direct heating method. Also, since it should be prepared the additional apparatus for timely providing carbon dioxide (CO2) or nitrogen (N2), the initial cost of equipment should be severely heavy and wider space to equip the apparatus should be required.

### SUMMARY OF THE INVENTION

### TECHNICAL PROBLEM

Accordingly, the object of the present invention is to provide a system for recycling waste tires enabling to achieve economical management by recycling a non-condensed gas produced during the pyrolyzing process as carrier gas.

Another object of the present invention is to provide a system for recycling waste tires have high quality economical efficiency and enabling to enhance yield to extract oil by the combustion removal of the oxygen contained in the non-condensed gas through simple equipment.

### TECHNICAL SOLUTION

According to the present invention, the present invention provides a system for recycling waste tires including a pyrolyzing furnace which pyrolyzes the waste tires by a direct heating method using a carrier gas and an oil collecting means which cooling condenses the high temperature steam produced in the pyrolyzing furnace (1) and collects oil, the system comprising: a carrier gas circulating line which passes the pyrolyzing furnace and an oil collecting means and recycles to the pyrolyzing furnace; and a carrier gas circulating provider connected to the carrier gas circulating line, provided with sensors for measuring the temperature in the pyrolyzing furnace and the pressure in the carrier gas circulating line, collecting and reserving non-condensed gas produced in the pyrolyzing furnace, and selectively providing it to the pyrolyzing furnace to use it as the carrier gas.

In the present invention, the carrier gas circulating provider includes a pressure measurer which measures the pressure in the carrier gas circulating line and a temperature measurer which measures the temperature in the pyrolyzing furnace, as a sensing element.

In the present invention, the carrier gas circulating provider includes a non-condensed gas reserving tank connected to the condensed gas circulating line and selectively reserving the non-condensed gas, and control valves connected to a pipe which connects the non-condensed gas reserving tank to the condensed gas circulating line and they selectively provide the non-condensed gas to the non-condensed gas reserving tank or provide the non-condensed gas in the non-condensed gas reserving tank to the condensed gas circulating line.

In the present invention, the carrier gas circulating provider provides the non-condensed gas flowing in the condensed gas circulating line in the non-condensed gas reserving tank when the pressure in the condensed gas circulating line is over 100mmAq and the temperature in the pyrolyzing furnace is over 200°C.

In the present invention, the condensed gas circulating line is installed with an oxygen removing heater having a heating element which is selectively heated by an electric source to completely burn the oxygen contained in the condensed gas.

In the present invention, the oxygen removing heater is an electric heater having a heating element which can heat over 300°C.

The preferred embodiments of the present invention will be described with reference to the accompanying drawings. The terms or words used in the present specification and claims are not supposed to limit to simple meanings in dictionary, but are supposed to be interpreted to an extent that inventors choose them for the best descriptions in proper forms and to be interpreted with the best match with the technical concept of the present invention.

### ADVANTAGEOUS EFFECTS

According to the system for recycling waste tires of the present invention, the system collects the non-condensed gas produced during the burning of the waste tires entered in the pyrolyzing furnace and uses it as carrier gas, which does not require the conventional apparatus or equipment for providing carrier gas such as carbon dioxide (CO2) or nitrogen (N2), and therefore the initial cost of equipment and cost for managing the system can be saved and finally the economical efficiency can be enhanced.

Further, oxygen can be burned together with the non-condensed gas through the oxygen removing heater, which can greatly enhance yield to extract oil according to the removal of the oxygen.

### BRIEF DESCRIPTION OF THE DRAWINGS

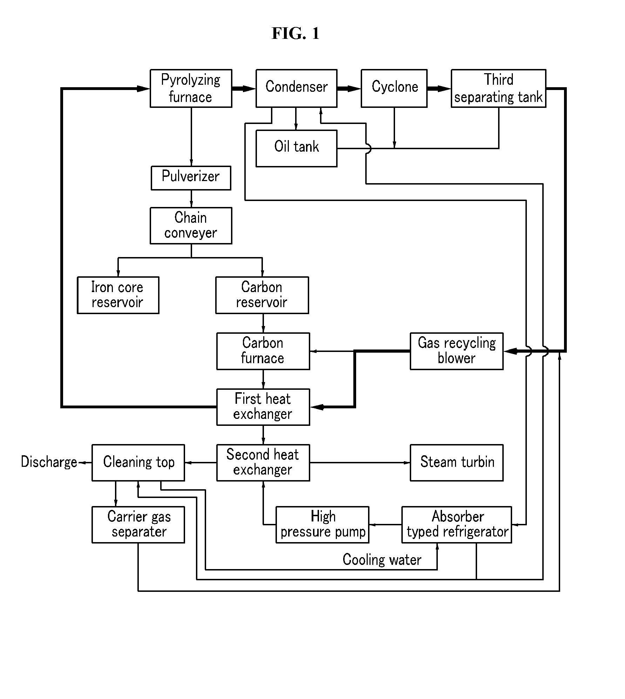

FIG. 1 is a block view schematically illustrating a structure of a conventional system for recycling waste tires;

FIG. 2 is a block view schematically illustrating a structure of a system for recycling waste tires according to a preferred embodiment of the present invention; and

FIG. 3 is a view schematically illustrating a structure of a system for recycling waste tires according to a preferred embodiment of the present invention.

<Descriptions of major elements in the drawings>
1: furnace 2: pulverizer
3: chain conveyer 4: carbon reservoir
5: iron core reservoir 6: condenser
7: oil tank 8: cyclone
9: third separating tank 10: carbon furnace
11: first heat exchanger 12: second heat exchanger
13: steam turbine 14: absorber typed refrigerator
15: high pressure pump 16: cleaning top
17: gas separating apparatus 18: gas recycling blower

### DETAILED DESCRIPTION OF THE PREFERRED EMBODIMENT

The above and other objects and advantages of the present invention will become readily apparent by reference to the following detailed description when considered in conjunction with the accompanying drawing wherein:

Hereinafter, a system for recycling waste tires according to preferred embodiment of the present invention will be described in detail with reference to the accompanying drawings.

Note that the same components or parts are shown to have same reference numbers in the drawings. In describing the present invention, any related known function or structures are not described in detail so as to not vague the gist of the present invention.

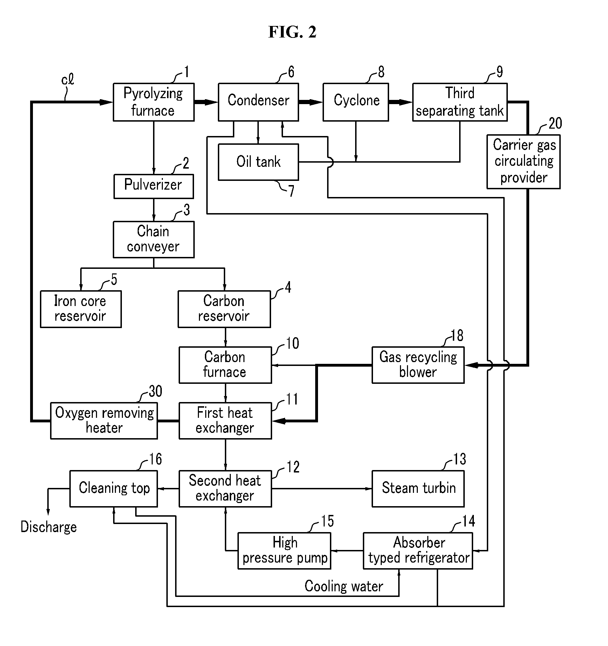

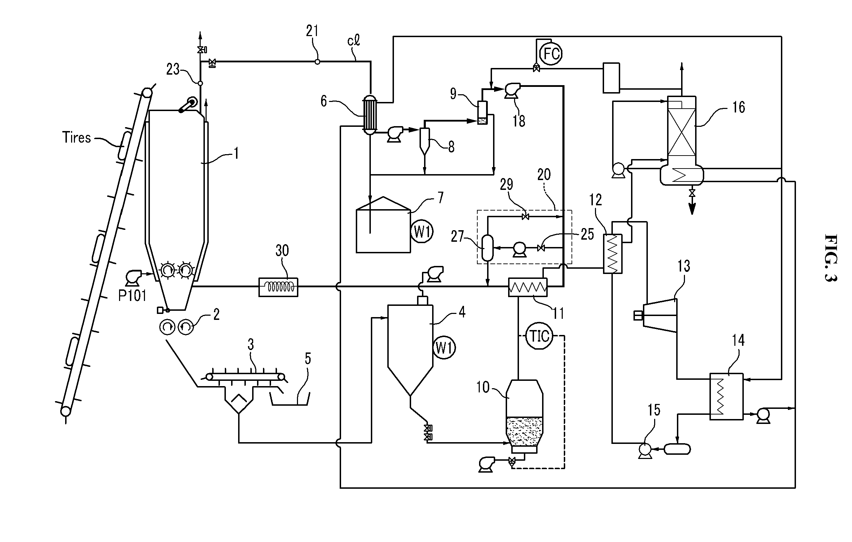

FIG. 2 is a block view schematically illustrating a structure of a system for recycling waste tires according to a preferred embodiment of the present invention, and FIG. 3 is a view schematically illustrating a structure of a system for recycling waste tires according to a preferred embodiment of the present invention.

Firstly, the main elements of the present invention are explained as follows.

Reference numeral (1) is a pyrolyzing furnace (1) for pyrolyzing waste tires by a direct heating method using gas such as carbon dioxide (CO2) or nitrogen (N2) as a carrier gas. The pyrolyzing furnace (1) is provided with an inlet through which the waste tires are injected on one side of the upper portion thereof. On the one side is provided with an outlet through which high temperature steam produced by the pyrolysis is circulated and an air outlet through which air is discharged during an initial operation. On the lower portion is provided with a discharging port through which remains produced after the pyrolysis is discharged.

Reference numeral (2) is a pulverizer (2) for pyrolyzing the remains and provided on the lower portion of the discharging port of the pyrolyzing furnace (1). Reference numeral (3) is a chain conveyer (3) for separating the pulverized carbon and iron cores, and reference numeral (4) is a carbon reservoir (4) for reserving the carbon and iron cores are separated from the above-chain conveyer (3) respectively. Reference numeral (5) is an iron core reservoir (5).

Reference numeral (6) is a condenser (6) for cooling condensing the high temperature air discharged through the outlet of the pyrolyzing furnace (1). Reference numeral (7) is an oil tank (7) for collecting oil separated during the cooling condensing, and reference numeral (8) is a cyclone (8) for collecting oil which is not collected during the cooling condensing and moves like gas together with carrier gas.

Reference numeral (9) is a third separating tank (9) for collecting oil mist which is not collected by the cyclone (8) by directly contacting liquefied oil.

Reference numeral (10) is a carbon furnace (10) in which the carbon reserved in the carbon reservoir 4 is moved and incinerated its self-heating, and reference numeral (11) is a first heat exchanger (11) for providing high temperature carrier gas to the pyrolyzing furnace (1) after receiving high temperature exhaust gas produced in the carbon furnace (10) and then heating the cooled carrier gas in high temperature. Reference numeral (12) is a second heat exchanger (12) for making high pressured steam using the exhaust gas passed through the first heat exchanger (11), and reference numeral (13) is a steam turbine (13) for producing electricity using the high pressured steam.

Reference numeral (14) is an absorber typed refrigerator (14) for condensing the lower pressured steam (about 5Kg/cm2) discharged from the steam turbine (13) by producing cooling water, and reference numeral (15) is a high pressure pump (15) for pumping the condensed water and recycling it to the second heat exchanger (12 ) .

Reference numeral (16) is a cleaning top (16) for cleaning the exhaust gas which is discharged from the second heat exchanger (12), and reference numeral (18) is a gas recycling blower (18).

The operation for the above mentioned system for recycling waste tires will be explained as follows.

The pyrolyzing furnace (1) is an element to pyrolyze waste tires by a direct heating method using non-condensed gas provided from a carrier gas recycling provider (20) as a carrier gas, and it is provided with an inlet through which the waste tires are injected, an outlet through which high temperature steam produced by the pyrolysis is discharged, and a discharging port through which remains produced by the pyrolysis is discharged. The gas in the pyrolyzing furnace (1) is outwardly discharged by inlet of the carrier gas, and a circulating outlet is opened after the air is completely discharged, which allows the condensed gas produced during the burning of the waste tires to be circulated. Herein, the condensed gas circulating line is (cl) in FIG. 2. That is, the heated steam produced during the burning of the waste tires which is injected in the pyrolyzing furnace (1) passes through the condenser (6), the cyclone (8), the third separating tank (9), the blower (18) and the first heat exchanger (11), and finally it is recycled to the pyrolyzing furnace (1).

A treating means for treating the remains produced after pyrolysis includes the pulverizer (2) composed of a pair of rollers and for pulverizing the remains injected between the pair of rollers, the chain conveyer (3) for separating the pulverized carbon and iron cores during conveyer movement, and the carbon reservoir (4) and the iron core reservoir 5 for reserving the separated carbon and iron cores respectively.

An oil collecting means is an element to separately extract the high temperature steam produced in the pyrolyzing furnace (1), and it includes a condenser (6) for cooling condensing the high temperature steam, an oil tank (7) for reserving oil which is firstly separated by cooling condensing of the condenser (6), a cyclone (8) for secondly collecting oil mist in gas condition with powerful whirlpool and transferring it to the oil tank (7), and a third separating tank (9) for collecting the remained oil which is not collected by the cyclone (8) by directly contacting it to liquefied oil.

A carbon treating mean includes a carbon furnace (10) for producing high temperature exhaust gas by burning carbon provided from the carbon reservoir (4), a first and second heat exchangers (11, 12) for heating the exhaust gas, a steam turbine (13) for generating electricity by receiving the high pressure steam produced in the second heat exchanger (12), an absorber typed refrigerator (14) for producing condensed water by receiving the low pressure steam, and a high pressure pump (15) for recycling the condensed water to the second heat exchanger (12).

This structure is almost identical with the system for recycling waste tires which is granted to the present invention. Merely, the present invention further includes the carrier gas circulating provider (20) and an oxygen removing heater (30) enabling to enhance economical efficiency and yield to extract oil by collecting non-condensed gas which is naturally produced during the burning of the waste tires by recycling it as a carrier gas instead of requiring an apparatus or equipment for providing and recycling additional carrier gas composed of carbon dioxide or nitrogen.

The carrier gas circulating provider (20) is installed to be connected to the condensed gas circulating line (cl).

Herein, the condensed gas circulating line (cl) indicates a path which passes the pyrolyzing furnace (1) and the oil collecting means and recycles to the pyrolyzing furnace 1, and it is shown as "cl".

The carrier gas circulating provider (20) installed on the condensed gas circulating line (cl) is provided with a sensor for measuring the temperature in the pyrolyzing furnace (1) and the pressure in the condensed gas circulating line (cl), and it collects and reserves the condensed gas produced in the pyrolyzing furnace (1) and selectively circulates it to the pyrolyzing furnace (1).

Herein, the carrier gas circulating provider (20) is a sensing element, and it includes a pressure measurer (21) for measuring the pressure in the condensed gas circulating line (cl) and a temperature measurer (23) for measuring the temperature in the pyrolyzing furnace (1). The pressure measurer (21) and the temperature measurer (23) can be embodied by means of well known analog or digital typed sensor and therefore it is not explained in detail.

Further, the carrier gas circulating provider (20) further includes a non-condensed gas reserving tank (27) connected to the condensed gas circulating line (cl) and selectively reserving the non-condensed gas, and control valves (25, 29) connected to a pipe which connects the non-condensed gas reserving tank (27) to the condensed gas circulating line (cl) and they selectively provide the non-condensed gas to the non-condensed gas reserving tank (27) or transfer the non-condensed gas reserved in the non-condensed gas reserving tank (27) to the condensed gas circulating line (cl) and finally provide it in the pyrolyzing furnace (1).

Meanwhile, the carrier gas circulating provider (20) uses the pressure measurer (21) and the temperature measurer (23) to decide if non-condensed gas is produced during the burning of the waste ties injected in the pyrolyzing furnace (1).

In the present invention, when the pressure measurer (21) which is installed on the condensed gas circulating line (cl) and measures the pressure in the path measures over set value of 100mmAq and the temperature measurer (23) which measures the temperature in the pyrolyzing furnace (1) measures over set value of 200°C, it is deemed that non-condensed gas is produced in the pyrolyzing furnace (1). At this time, as shown in FIG. 3, the control valve (25) is opened such that the condensed gas circulating line (cl) and the non-condensed gas reserving tank (27) are connected from each other. And, a compressor (not shown) is operated such that the non-condensed gas flowing in the condensed gas circulating line (cl) is provided in the non-condensed gas reserving tank (27).

Conversely, when the pressure measurer (21) and the temperature measurer (23) are below the set values, the control valve (25) is closed and the control valve (29) is opened such that the non-condensed gas reserved in the non-condensed gas reserving tank (27) is transferred to the condensed gas circulating line (cl) and finally it is provided in the pyrolyzing furnace (1).

Meanwhile, the present invention further includes the oxygen removing heater (30) on the condensed gas circulating line (cl) to remove the remained oxygen in the pyrolyzing furnace (1).

That is, the condensed gas circulating line (cl) is installed with the oxygen removing heater (30) having a heating element which is selectively heated by an electric source to completely burn the oxygen contained in the condensed gas, and an electric heater having a heating element which can heat over 300°C may be preferably applied as the oxygen removing heater (30).

Although the preferred embodiment of the present invention have been described, it is understood that the present invention should not be limited to this preferred embodiment but various changes and modifications can be made by one skilled in the art within the sprit and scope of the present invention aimed.

## Claims

1. A system for recycling waste tires including a pyrolyzing furnace which pyrolyzes the waste tires by a direct heating method using a carrier gas and an oil collecting means which cooling condenses the high temperature steam produced in the pyrolyzing furnace and collects oil, the system comprising:
a carrier gas circulating line (cl) which passes the pyrolyzing furnace (1) and an oil collecting means and recycles to the pyrolyzing furnace (1); and
a carrier gas circulating provider (20) connected to the carrier gas circulating line (cl), provided with sensors for measuring the temperature in the pyrolyzing furnace (1) and the pressure in the carrier gas circulating line (cl), collecting and reserving non-condensed gas produced in the pyrolyzing furnace (1), and selectively providing it to the pyrolyzing furnace (1) to use it as the carrier gas.

2. The system according to claim 1, wherein the carrier gas circulating provider (20) includes a pressure measurer (21) which measures the pressure in the carrier gas circulating line (cl) and a temperature measurer (23) which measures the temperature in the pyrolyzing furnace (1), as a sensing element.

3. The system according to claim 1, wherein the carrier gas circulating provider (20) includes a non-condensed gas reserving tank (27) connected to the condensed gas circulating line (cl) and selectively reserving the non-condensed gas, and control valves (25, 29) connected to a pipe which connects the non-condensed gas reserving tank (27) to the condensed gas circulating line (cl) and they selectively provide the non-condensed gas to the non-condensed gas reserving tank (27) or provide the non-condensed gas in the non-condensed gas reserving tank (27) to the condensed gas circulating line (cl).

4. The system according to claim 1, wherein the carrier gas circulating provider (20) provides the non-condensed gas flowing in the condensed gas circulating line (cl) in the non-condensed gas reserving tank (27) when the pressure in the condensed gas circulating line (cl) is over 100mmAq and the temperature in the pyrolyzing furnace (1) is over 200°C.

5. The system according to claim 1, wherein the condensed gas circulating line (cl) is installed with an oxygen removing heater (30) having a heating element which is selectively heated by an electric source to completely burn the oxygen contained in the condensed gas.

6. The system according to claim 5, wherein the oxygen removing heater (30) is an electric heater having a heating element which can heat over 300°C.
